# EUROPEAN PATENT SPECIFICATION

(11) **EP 2 266 281 B1**
(45) Date of publication and mention of the grant of the patent: **22.06.2016**
(21) Application number: 09728804.7
(22) Date of filing: 18.03.2009
(51) Int. Cl.: H04L 29/06

(54) **DYNAMIC SERVICE GENERATION IN IMS NETWORK**
DYNAMISCHE DIENSTERZEUGUNG IN EINEM IMS-NETZWERK
GÉNÉRATION DE SERVICE DYNAMIQUE DANS UN RÉSEAU IMS

(30) Priority: 31.03.2008 MY 0800912
(43) Date of publication of application: 29.12.2010
(73) Proprietor: BRITISH TELECOMMUNICATIONS PUBLIC LIMITED COMPANY, London, Greater London EC1A 7AJ (GB)
(72) Inventor: CHUA, Hui Na, Oug Kuala Lumpur 58200 (MY)
(74) Representative: Roberts, Simon Christopher
(86) International application number: PCT/GB2009/000735
(87) International publication number: WO 2009/122128

(56) References cited:
- US-A1- 2006 104 431
- US-A1- 2007 086 582

## Description

### Field of the Invention

The present invention relates to dynamic service generation in an Internet Protocol Multimedia Subsystem (IMS) network.

### Background of the Invention

IP Multimedia Subsystem (IMS) is a set of specifications that defines an architectural framework that enables convergence of voice, video, data and mobile network technology over an internet protocol (IP) based infrastructure.

One of the objectives of IMS architecture is to create a common platform for service creation. With a common platform, service capabilities, that is, self-contained functionalities that are needed to realise services and which can be reused across different application servers (ASs), can be readily invoked, combined and deployed. This reduces the time-to-market for new multimedia services.

However, despite the open architecture service creation environment provided by IMS, dynamic service generation is difficult to implement as current Third Generation Partnership Project (3GPP) standards only address interactions between application servers and the IMS network, in particular, the Serving Call Session Control Function (S-CSCF), and not between individual services, even though mechanisms for managing potential conflicts between interacting service capabilities are necessary for dynamic service generation. Further, current 3GPP standards do not address issues arising from communication with different application servers running on different protocols, in particular, how communication messages are exchanged and interpreted between application servers to ensure no conflict during service execution.

US2007/0086582 describes the use, in an IMS, of a Serving-Call Session Control Function (S-CSCF) which includes a Service Capability Interaction Manager (SCIM). The SCIM is described as being "an adjunct IMS platform that also orchestrates service invocation at session setup, modify, or teardown". Further, the SCIM "may also be based on a subscriber's profile and predefined interaction rules to determine which services are to be invoked at run time and what type of application and/or media capabilities should be engaged in order to properly execute the services. (The) SCIM may allow for more complex rules to be used for service determination based on the subscriber's profile and, for example, on external information, such as policy information, location information, presence information, the readiness condition of an application server (e.g., load balancing information, network outage information, application server status information, resource availability information, etc.), etc."

US2006/0104431 also describes an IMS including a SCIM function. It is stated that "The mechanism for configuring feature interaction management and service blending is an application programming interface (API) based on steplets...a steplet engine is introduced corresponding to the API; the steplet engine provides the common functions required for feature interaction management and service blending."

Thus, there is a need for a dynamic service generation system in an IMS network that addresses interactions and protocol differences between service capabilities.

### Summary of the Invention

In a first aspect, the invention provides a service generation system in a communications network, the system comprising: a processor configured to receive a service request, generate a service from a plurality of service capabilities and return the service; an analysis module configured to identify the service capabilities for service creation based on the service request; a management module configured to determine an invocation sequence for the service capabilities identified for service creation and to match the service capabilities identified for service creation against compatible and incompatible service capability combinations; and one or more invocation modules configured to invoke the service capabilities after the invocation sequence is determined.

Advantageously, by determining the invocation sequence for the service capabilities prior to invocation, the service generation system is able to manage service interactions in the communications network and prevent undesirable interactions between the service capabilities during a session.

By configuring the management module to match the service capabilities identified for service creation against compatible and incompatible service capability combinations, identification of desirable and undesirable service capability combinations in the service capabilities identified for service creation is facilitated. The management module may also be configured to remove a conflicting service capability from the invocation sequence if an incompatible service capability combination is identified. This prevents invocation of incompatible service capabilities during the session. The management module may further be configured to arrange unmatched service capabilities according to priority levels assigned to the service capabilities. This further reduces the likelihood of conflicting interactions between the service capabilities during the session.

The management module may be configured to determine if the service capabilities are to be invoked sequentially, in parallel or both sequentially and in parallel. Advantageously, parallel invocation of the service capabilities reduces the time required for service generation and thus increases the efficiency of the service generation system.

The one or more invocation modules may be configured to apply respective invocation mechanisms according to respective communication protocols of the service capabilities identified for service creation. This addresses protocol differences between the different service capabilities.

A database may be provided to store information on the available service capabilities. This provides information on the service capabilities that may be invoked and the interaction relationships between the service capabilities. The analysis module may be configured to compare the service request against profiles of the available service capabilities stored in the database. More particularly, the analysis module may be configured to compare context information in the service request against the profiles of the available service capabilities. The analysis module may also be configured to determine whether threshold criteria for respective ones of the service capabilities are met. This allows a system administrator, for example, a service operator or a service provider, to control and increase the accuracy of the service generation system in identifying suitable service capabilities for service creation.

The communications network may be an Internet Protocol Multimedia Subsystem (IMS) network. The service request may be received from a Serving Call Session Control Function (S-CSCF).

According to a second aspect, the invention provides a method for responding to a service request, the method comprising: identifying a plurality of service capabilities for service creation based on the service request; determining an invocation sequence for the service capabilities identified for service creation; matching the service capabilities identified for service creation against compatible and incompatible service capability combinations; invoking the service capabilities after determining the invocation sequence; generating a service with the service capabilities invoked; and returning the service.

In the second aspect, corresponding advantages are obtained as previously described in respect of the first aspect. Moreover, corresponding further features as described above in respect of the first aspect may also be employed.

According to a third aspect, the invention further provides a computer program or suite of programs so arranged such that when executed by a computer system it/they cause/s the system to perform the process of any of the preceding claims. The computer program or programs may be embodied by a modulated carrier signal incorporating data corresponding to the computer program or at least one of the suite of programs, for example a signal being carried over a network such as the Internet.

Additionally, from a fourth aspect the invention also provides a computer readable storage medium storing a computer program or at least one of suite of computer programs according to the third aspect. The computer readable storage medium may be any magnetic, optical, magneto-optical, solid-state, or other storage medium capable of being read by a computer.

Other aspects and advantages of the invention will become apparent from the following detailed description, taken in conjunction with the accompanying drawings, illustrating by way of example the principles of the invention.

Throughout the specification and claims, the following terms take the meanings explicitly associated herein, unless the context clearly dictates otherwise.

The term "service" refers to a user experience provided by one or more applications.

The term "applications" refers to software components providing services to users by utilising service capability features.

The term "service capabilities" refers to self-contained functionalities that are needed to realise services and that can be reused across different application servers. Features offered by service capabilities are accessible via a standardised application interface.

The term "application server" refers to a server that hosts an application.

The term "application interface" refers to a standardised Interface used by applications to access service capability features.

### Brief Description of the Drawings

Embodiments of the invention will now be described, by way of example only, with reference to the accompanying drawings, in which:
FIG. 1 is a schematic diagram of a dynamic service generation system in an IP Multimedia Subsystem (IMS) network in accordance with one embodiment of the present invention;
FIG. 2 is a schematic flow diagram of a method for responding to a service request in accordance with one embodiment of the present invention; and
FIG. 3 is a schematic diagram of a dynamic service generation system in an IMS network in accordance with another embodiment of the present invention.

### Detailed Description of Exemplary Embodiments

The detailed description set forth below in connection with the appended drawings is intended as a description of the presently preferred embodiments of the invention, and is not intended to represent the only form in which the present invention may be practiced. It is to be understood that the same or equivalent functions may be accomplished by different embodiments that are intended to be encompassed within the scope of the invention.

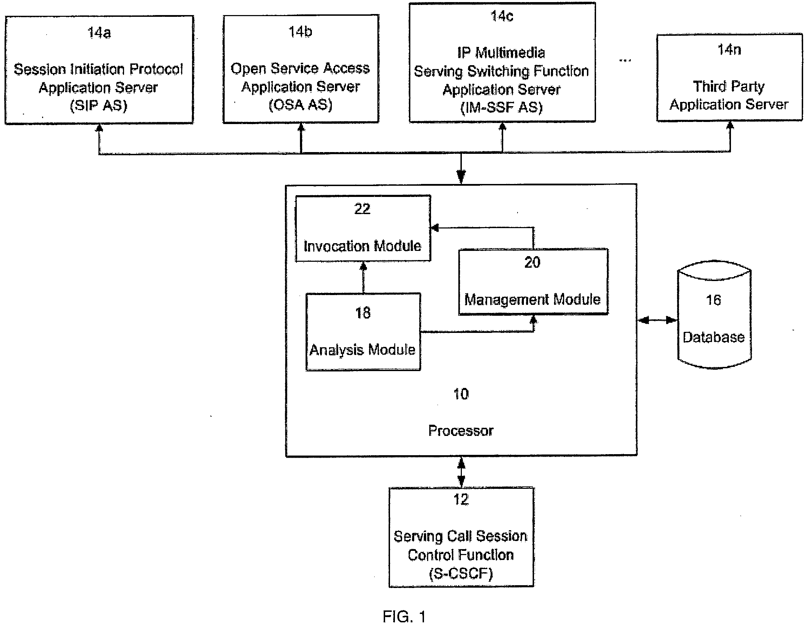

Referring now to FIG. 1, a dynamic service generation system in an IP Multimedia Subsystem (IMS) network is shown. The system includes a processor 10 coupled between a Serving Call Session Control Function (S-CSCF) 12 and a plurality of application servers (ASs) 14 such as, for example, a Session Initiation Protocol application server (SIP AS) 14a, an Open Service Access application server (OSA AS) 14b, an IP Multimedia Serving Switching Function application server (IM-SSF AS) 14c and other third party application servers (e.g. application server 14n). The processor 10 is also coupled to a database 16. The processor 10 includes an analysis module 18, a management module 20 and an invocation module 22.

The processor 10 is configured to receive a service request from the S-CSCF 12, generate a service from one or more service capabilities provided by one or more of the application servers 14 and return the requested service.

The database 16 is configured to store information on the available service capabilities. The information stored in the database 16 may be pre-defined by a service operator or a service provider.

The analysis module 18 is configured to identify one or more service capabilities for service creation based on the service request from the S-CSCF 12.

The management module 20 is configured to determine an invocation sequence for the service capabilities where more than one service capability is identified by the analysis module 18 for service creation.

The invocation module 22 is configured to invoke the service capabilities after the invocation sequence is determined.

IMS network architecture is well known in the art. Accordingly, a detailed description of typical IMS network components such as, for example, the S-CSCF 12 and the application servers 14, is not required for a complete understanding of the present invention. Further, for ease of illustration and because such details are not important for an understanding of the present invention, not all the components of the IMS network are shown in FIG. 1. These other IMS components are described in 3GPP, "IP Multimedia Subsystem (IMS)", draft TS 23.228 v8.2.0 and perform as described in the present embodiment.

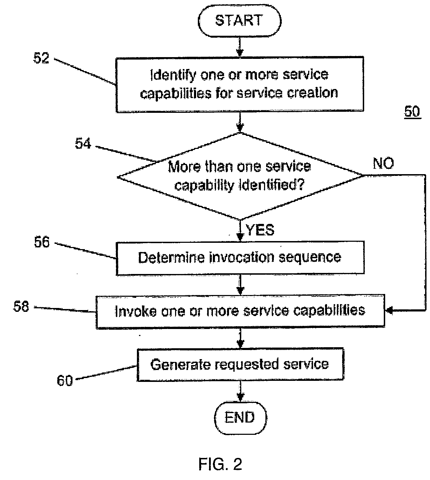

Having described the various system modules in one embodiment of the present invention, the operation of these modules will now be described in greater detail below with reference to FIG. 2.

Referring now to FIG. 2, a schematic flow diagram of a method 50 for responding to a service request is shown. The method 50 begins when a service request is received from the S-CSCF 12. Examples of the service request include a request to initiate a call or an event trigger, for example, to inform the processor 10 of a change in user location.

At step 52, the analysis module 18 identifies one or more service capabilities for service creation based on the service request. The analysis module 18 compares the service request against profiles of available service capabilities stored in the database 16 and identifies one or more service capabilities for service creation based on the comparison. A service capability is identified for service creation if its profile matches the service request. Examples of service capability profiles stored in the database 16 are shown in Table 1 below:

**Table 1**

| **Service Capability** | **Context** | **Value** | **...** | **...** |
|---|---|---|---|---|
| C1 | T1 | x | ... | ... |
| C1 | T2 | y | ... | ... |
| C2 | T3 | z | ... | ... |
| C3 | T4 | m | ... | ... |
| ... | ... | ... | ... | ... |
| C8 | T3 | Z | ... | ... |
| ... | ... | ... | ... | ... |

In the examples shown in Table 1 above, each service capability profile includes context information, that is, information on user environment, in the Context column and a corresponding value in the Value column. For instance, a service capability for changing a delivery method from voice to text may specify "location" in the Context column and "library" in the Value column. Another example of a context-value pair would be "connection" in the Context column and "Wireless Fidelity (WiFi)" in the Value column. The data in the Context and Value columns is compared with context information in the service request, for example, context information embedded in the header of a Session Initiation Protocol (SIP) message from the S-CSCF 12.

As seen from Table 1, a service capability (e.g. C1) may be applicable in more than one context. Also, different service capabilities (e.g. C2 and C8) may be applicable in the same context. Accordingly, the service operator or the service provider may specify a threshold criterion for each service capability. A service capability is identified for service creation if a determination is made that the threshold criterion for the service capability is met. For instance, a threshold criterion for a service capability applicable in four (4) contexts may be set at three (3). In such an instance, the service capability is not identified for service creation if only two (2) of its contexts match the service request.

It should be understood by those of skill in the art that the database structure shown in Table 1 is merely illustrative and not limiting of the present invention. The service operator or service provider may specify more stringent rules for a match. For instance, a service provider may require subscription to a location service that provides a list of restaurants in an area when user location changes before a user can access such a service capability even though the service request matches the service capability profile. Further, as seen from Table 1, additional columns may be included to provide additional service capability descriptions.

At step 54, a determination is made as to whether more than one service capability is identified for service creation by the analysis module 18.

An invocation sequence is determined by the management module 20 at step 56 if more than one service capability is identified for service creation. The management module 20 determines if the service capabilities are to be invoked sequentially, in parallel or both sequentially and in parallel. To determine the invocation sequence, the management module 20 matches the service capabilities identified for service creation by the analysis module 18 against compatible and incompatible service capability combinations stored in the database 16. If a match is identified, the management module 20 returns the corresponding invocation sequence. Examples of compatible service capability combinations and their corresponding invocation sequences stored in the database 16 are shown in Table 2 below, while examples of incompatible service capability combinations and their corresponding invocation sequences are shown in Table 3 below:

**Table 2**

| **Compatible Combination** | **Invocation Sequence** |
|---|---|
| C1, C3 | C1, C3 |
| C2, C4, C5 | C4, C2-C5 |
| C3, C5 | C5, C3 |
| ... | ... |

**Table 3**

| **Service capability** | **Incompatible Service Capability** | **Invocation Sequence** |
|---|---|---|
| C1 | C2, C5 | C5, C1-C2 |
| C2 | C6 | !C6 |
| C3 | C4 | ... |
| ... | ... | ... |

Using an example from Table 2, the management module 20 will return an invocation sequence of service capability C1, followed by service capability C3 if the analysis module 18 identifies that a combination of service capabilities C1 and C3 is required for service creation. As another example, if the analysis module 18 identifies that a combination of service capabilities C2, C4 and C5 is required for service creation, then, based on Table 2, the management module 20 will return an invocation sequence of service capability C4, followed by simultaneous invocation of service capabilities C2 and C5.

Referring now to Table 3, the Incompatible Service Capability column contains one or more service capabilities that cannot be invoked after a particular service capability. For instance according to Table 3, service capabilities C2 and C5 cannot be invoked after service capability C1. Accordingly, when the combination of service capabilities C1, C2 and C5 is identified for service creation, the management module 20 returns the invocation sequence corresponding to the incompatible service capability combination, namely service capability C5, followed by service capabilities C1 and C2 in parallel. Similarly, if service capabilities C2 and C6 are identified for service creation by the analysis module 18, then, according to Table 3, service capability C6 is aborted as indicated by "!C6" in the Invocation Sequence column to avoid a conflicting service capability interaction. In other words, the conflicting service capability C6 is removed from the invocation sequence on identification of the incompatible combination of service capabilities C2 and C6.

If there are unmatchable service capabilities in the list of service capabilities identified for service creation by the analysis module 18, the management module 20 determines the invocation sequence for the unmatchable service capabilities according to priority levels assigned to the service capabilities. The priority levels may be assigned by the service operator or the service provider and stored in the database 16. Examples of priority levels assigned to the service capabilities are shown in Table 4 below:

**Table 4**

| **Service capability** | **Invocation order** |
|---|---|
| C1 | 3 |
| C2 | 4 |
| C3 | 5 |
| C4 | 1 |
| C5 | 2 |
| C6 | ... |
| ... | ... |

In Table 4, service capability C4 is assigned the highest level of priority. Accordingly, if, for example, service capabilities C1 and C4 are both identified for service creation, then, based on Table 4, service capability C4 is invoked ahead of service capability C1.

An example of a pseudo algorithm for the management module 20 is provided below:

```
 compatibility(c)
   / / c = list of service capabilities identified for service
   / / creation
   {
   String X; / / threshold number of contexts below which a service
                  / / capability is not identified for service creation
   E = temporary table to store Table 2 data;
  F = temporary table to store Table 3 data;
 R = ordered list of service capabilities to be invoked;
  i = E.size(); / / number of rows in E;
  j = F.size(); / / number of rows in F;
  C = c; / / C = temporary list to process c
  D = temporary list for processing;
  P = temporary list for processing;
  S = temporary list for processing;
  m = 0; / / m = counter
  If !C.empty() / / skip if no service capability is identified
                   / / for service creation
  {
  While (!E.empty() and (m >= 0))
  {
       If C == E[m,0] / / matching compatible combination found
       {
            R = E[m,1];
            m = -1; / / out of loop
       }
       Else m = m + 1;
  }
  If (m >= 0) / / if C does not match with any of E
  {
       m = 0;
       While !F.empty()
       {
             P = C;
                  While (m >= 0)
                  {
                       If ( (P in F[m,0]) and (P in F[m,1]))
 {
                             n = count(P);
                                  / / count() is a logical function to
                                 / / count the number of service
                                 / / capabilities in P
                            D = getCounted(P, F[m,0], F[m,1]);
                                 / / getCounted() is a function to
                                 / / extract the service capabilities
                                 / / that have been evaluated in row m
                                 // of Table 3
                            R = D.push(); / / insert corresponding
                                              / / invocation sequence into
                                              / / R
                            If (n > count (F[m,0], F[m,1]))
                            {
                                 P = getExtra(P,D);
                                       / / getExtra() is a function to
                                       / / extract the service
                                       / / capabilities that have not yet
                                       / / been evaluated
                                 If (!E.empty() and !F.empty() and
                                       !P.empty())
                                       m = m +1;
                                 Else
                                       {
                                       R = R + Arrange(P);
                                      m = -1;
                                       }
                            }
                            Else
                                 m = -1;
                       }
                       Else
                            m = m +1;
                 }
                  If (m >= 0)
                       R = R + Arrange(P);
```

Else if (m = 0) R = Arrange(P); } } action(R); } }

In the above pseudo algorithm, Arrange () represents a procedure to arrange unmatched service capabilities according to the respective priority levels assigned to the service capabilities (see, for example, the priority levels assigned to the service capabilities in Table 4) and action () represents a procedure to call the invocation module 22 to invoke the list of service capabilities identified for service creation by the analysis module 18 in accordance with the invocation sequence determined by the management module 20.

If it is determined at step 54 that only one service capability is required, step 56 is skipped.

At step 58, the invocation module 22 invokes the one or more service capabilities identified by the analysis module 18 for service creation. If more than one service capability is identified for service creation, the invocation module 22 invokes the service capabilities according to the invocation sequence determined by the management module 20.

To address the issue of communication with different protocols, the invocation module 22 includes invocation mechanisms for all the available service capabilities regardless of communication protocol. The invocation module 22 applies respective invocation mechanisms according to the respective communication protocols of the one or more service capabilities identified for service creation. Advantageously, this provides a unified interface to hide the complexity of calling different service capabilities running on different protocols.

An example of a pseudo algorithm for the invocation module 22 is provided below:

```
invocation(service capability, parameters)
 {
 / / declaration of variables;
 Service capability 1()
 {
 }
 Service capability 2()
 {
 }
 Service capability 3()
 {
 }
 Return;
 }
```

In the above pseudo algorithm, parameters represents additional input parameters that may be required depending on the interface between the invocation module 22 and the service capability to be invoked. Examples of the additional input parameters required for respective ones of the service capabilities are shown in Table 5 below:

**Table 5**

| **Service capability** | **Parameter** | **Data type** | **Default** | **...** |
|---|---|---|---|---|
| C1 | P1 | Integer | 23 | ... |
| C1 | P2 | Character | "anything" | ... |
| C2 | P3 | Character | "191.168.1.2" | ... |
| ... | ... | ... | ... | ... |

As will be appreciated by those of skill in the art, the invocation module 22 is programming dependent as it needs to systematically call different service capabilities with different protocols. Hence, it is illustrated here in pseudocode to provide a high-level concept view.

At step 60, a service is generated with the one or more service capabilities invoked and the method 50 ends with the return and delivery of the requested service.

As will be appreciated by those of skill in the art, Tables 1 to 5 and the foregoing examples are provided to facilitate an understanding of the invention. It should be understood that the present invention is not limited to these Tables and examples. For example, Table 2 or 3 may specify an invocation sequence where three (3) service capabilities are run in parallel or Table 3 may specify aborting more than one (1) service capability in response to an undesirable combination or the tables may include one or more additional columns providing additional service capability descriptions.

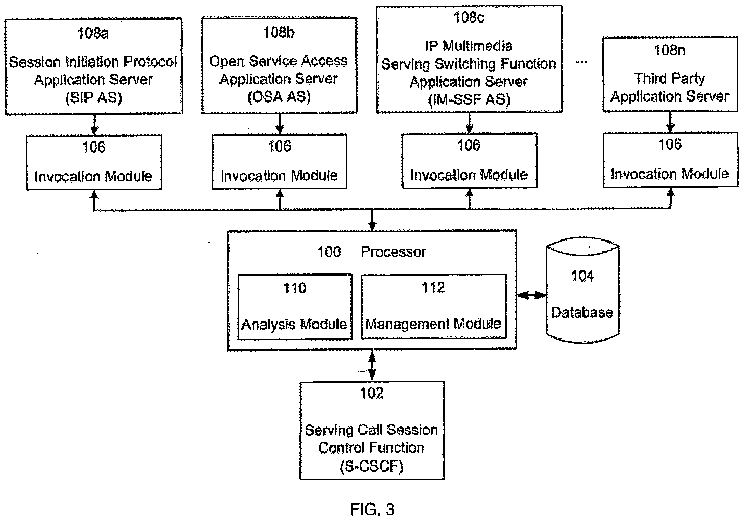

Referring now to FIG. 3, a dynamic service generation system in an IMS network in accordance with another embodiment of the present invention is shown. The system includes a processor 100 coupled to an S-CSCF 102, a database 104 and a plurality of invocation modules 106. Each of the invocation modules 106 is coupled to respective ones of a plurality of application servers (ASs) 108 such as, for example, a Session Initiation Protocol application server (SIP AS) 108a, an Open Service Access application server (OSA AS) 108b, an IP Multimedia Serving Switching Function application server (IM-SSF AS) 108c and other third party application servers (e.g. application server 108n). The processor 100 includes an analysis module 110 and a management module 112.

The second embodiment is largely the same as the first embodiment. Accordingly, the following description of the second embodiment will concentrate mainly on those parts of the second embodiment which differ from the first embodiment. For a full description of any part of the second embodiment not detailed below, reference should be made to the above description of the corresponding parts of the first embodiment.

The second embodiment differs from the first embodiment in that the invocation modules 106 are distributed in the dynamic service generation system, unlike in the first embodiment where the invocation module 22 is centralised in the processor 10. In the second embodiment, each of the invocation modules 106 is dedicated to respective ones of the application servers 108 it is coupled to. Each of the invocation modules 106 may be logically linked to or physically located with respective ones of the application servers 108.

The dynamic service generation system of the second embodiment responds to a service request from the S-CSCF 102 in largely the same manner as described in FIG. 2. However, the management module 112 calls the invocation modules 106 differently in the second embodiment. In the second embodiment, the management module 112 calls respective ones of the invocation modules 106 in accordance with the invocation sequence determined by the management module 112. An example of a pseudo algorithm for the management module 112 is provided below:

```
 compatibility(c)
 / / c = list of service capabilities identified for service
 / / creation
 {
 String X; / / threshold number of contexts below which a service
              / / capability is not identified for service creation
 E = temporary table to store Table 2 data;
 F = temporary table to store Table 3 data;
 R = ordered list of service capabilities to be invoked;
 i = E.size(); / / number of rows in E;
 j = F.size(); / / number of rows in F;
 C = c; // C = temporary list to process c
 D = temporary list for processing;
 P = temporary list for processing;
 S = temporary list for processing;
 m = 0; // m = counter
 If !C.empty() / / skip if no service capability is identified
                   / / for service creation
  {
 While (!E.empty() and (m >= 0))
  {
       If C == E[m,0] // matching compatible combination found
       {
            R = E[m,1] ;
            m = -1; / / out of loop
       }
       Else m = m + 1;
  }
 If (m >= 0) / / if C does not match with any of E
  {
       m = 0;
       While !F.empty()
       {
            P = C;
                 While (m >= 0)
                  {
                       If (P in F[m,0]) and (P in F[m,1])
                       {
                            n = count(P);
                                  / / count() is a logical function to
                                  / / count the number of service
                                  / / capabilities in P
                            D = getCounted(P, F[m,0], F[m,1]);
                                  / / getCounted() is a function to
                                  / / extract the service capabilities
                                  / / that have been evaluated in row m
                                  / / of Table 3
                            R = D.push(); // insert corresponding
                                              / / invocation sequence into
                                              / / R
                             If (n > count (F[m,0], F[m,1]))
                             {
                                  P = getExtra(P,D);
                                       / / getExtra() is a function to
                                       / / extract the service
                                       / / capabilities that have not yet
                                       / / been evaluated
                                  If (!E.empty() and !F.empty() and
                                       !P.empty())
                                                   m = m +1;
                                             Else
                                                    {
                                                   R = R + Arrange(P);
                                                   m = -1;
                                                    }
                                       }
                                      Else
                                             m = -1;
                                }
                                Else
                                      m = m +1;
                          }
                          If (m >= 0)
                                R = R + Arrange(P);
                          Else if (m = 0)
                                R = Arrange(P);
             }
       }
      m = 0;
      While !R.empty()
       {
             getAS (R[m]) ;
             R.push(S); / / get S out of R;
             m = m+ 1;
       }
       }
 }
```

In the above pseudo algorithm, Arrange ( ) represents a procedure to arrange unmatched service capabilities according to the respective priority levels assigned to the service capabilities (see, for example, the priority levels assigned to the service capabilities in Table 4) and getAS ( ) represents a procedure to call respective ones of the invocation modules 106 to invoke the service capabilities according to the invocation sequence determined by management module 112.

As is evident from the foregoing discussion, the present invention provides a service interaction architecture model and invocation mechanism that dynamically manages service interactions in an IMS network. This is realised through the provision of descriptions of individual services and service interaction relationships. Service interactions in the IMS network are managed with knowledge of potential interaction decisions, for instance, the order and priority in which service capabilities are to be invoked at the application servers. Protocol differences are addressed by means of an interface to the application servers that provides identification of individual services.

While the preferred embodiments of the invention have been illustrated and described, it will be clear that the invention is not limited to these embodiments only. Numerous modifications, changes, variations, substitutions and equivalents will be apparent to those skilled in the art without departing from the scope of the invention as described in the claims.

Further, unless the context dearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A service generation system in a communications network, the system comprising:
a processor (10, 100) configured to receive a service request, generate a service from a plurality of service capabilities and return the service;
an analysis module (18, 110) configured to identify the service capabilities for service creation based on the service request;
**characterised in that** :
a management module (20, 112) configured to determine an invocation sequence for the service capabilities identified for service creation and to match the service capabilities identified for service creation against compatible and incompatible service capability combinations; and
one or more invocation modules (22, 106) configured to invoke the service capabilities after the invocation sequence is determined.

2. The service generation system according to claim 1, wherein the management module (20, 112) is configured to remove a conflicting service capability from the invocation sequence if an incompatible service capability combination is identified.

3. The service generation system according to claim 1 or claim 2, wherein the management module (20, 112) is configured to arrange unmatched service capabilities according to priority levels assigned to the service capabilities.

4. The service generation system according to any one of the preceding claims, wherein the management module (20, 112) is configured to determine if the service capabilities are to be invoked sequentially, in parallel or both sequentially and in parallel.

5. The service generation system according to any one of the preceding claims, wherein the one or more invocation modules (22, 106) are configured to apply respective invocation mechanisms according to respective communication protocols of the service capabilities identified for service creation.

6. The service generation system according to any one of the preceding claims, further comprising a database (16, 104) configured to store information on available service capabilities.

7. The service generation system according to claim 6, wherein the analysis module (18, 110) is configured to compare the service request against profiles of the available service capabilities stored in the database (16, 104).

8. The service generation system according to claim 7, wherein the analysis module (18, 110) is configured to compare context information in the service request against the profiles of the available service capabilities.

9. The service generation system according to any one of the preceding claims, wherein the analysis module (18, 110) is configured to determine whether threshold criteria for respective ones of the service capabilities are met.

10. The service generation system according to any one of the preceding claims, wherein the communications network is an Internet Protocol Multimedia Subsystem (IMS) network.

11. The service generation system according to any one of the preceding claims, wherein the service request is received from a Serving Call Session Control Function (S-CSCF) (12, 102).

12. A method (50) for responding to a service request, the method comprising:
identifying a plurality of service capabilities (52) for service creation based on the service request;
determining an invocation sequence (56) for the service capabilities identified for service creation;
matching the service capabilities identified for service creation against compatible and incompatible service capability combinations;
invoking the service capabilities (58) after determining the invocation sequence;
generating a service (60) with the service capabilities invoked; and
returning the service.

13. The method for responding to a service request according to claim 12, further comprising removing a conflicting service capability from the invocation sequence if an incompatible service capability combination is identified.

14. The method for responding to a service request according to claim 12 or 13, further comprising arranging unmatched service capabilities according to priority levels assigned to the service capabilities.

15. The method for responding to a service request according to any one of claims 12 to 14, further comprising determining if the service capabilities are to be invoked sequentially, in parallel or both sequentially and in parallel.

16. The method for responding to a service request according to any one of claims 12 to 15, further comprising applying respective invocation mechanisms according to respective communication protocols of the service capabilities identified for service creation.

17. The method for responding to a service request according to any one of claims 12 to 16, further comprising comparing the service request against profiles of available service capabilities.

18. The method for responding to a service request according to claim 17, further comprising comparing context information in the service request against the profiles of the available service capabilities.

19. The method for responding to a service request according to any one of claims 12 to 18, further comprising determining whether threshold criteria for respective ones of the service capabilities are met.

## Patentansprüche

1. System zur Dienst-Erzeugung in einem Kommunikationsnetzwerk, wobei das System umfasst:
einen Prozessor (10, 100), der so ausgebildet ist, dass er eine Dienstanforderung empfängt, einen Dienst aus einer Vielzahl von Dienst-Leistungsfähigkeiten erzeugt und den Dienst rücksendet,
ein Analysemodul (18, 110), das so ausgebildet ist, dass es die Dienst-Leistungsfähigkeiten für die Dienst-Erzeugung auf der Basis der Dienstanforderung ermittelt,
**gekennzeichnet durch**
ein Management-Modul (20, 112), das so ausgebildet ist, dass es eine Aufruf-Reihenfolge für die zur Dienst-Erzeugung ermittelten Dienst-Leistungsfähigkeiten bestimmt und die zur Dienst-Erzeugung ermittelten Dienst-Leistungsfähigkeiten hinsichtlich kompatibler und nichtkompatibler Kombinationen von Dienst-Leistungsfähigkeiten abgleicht,
und
ein Aufruf-Modul (22,106) oder mehrere Aufruf-Module (22,106) mit einer solchen Ausbildung, dass die Dienst-Leistungsfähigkeiten nach der Bestimmung der Aufruf-Reihenfolge aufgerufen werden.

2. System zur Dienst-Erzeugung nach Anspruch 1, bei dem das Management-Modul (20, 112) so ausgebildet ist, dass es eine kollidierende Dienst-Leistungsfähigkeit aus der Aufruf-Reihenfolge entfernt, wenn eine nichtkompatible Kombination einer Dienst-Leistungsfähigkeit ermittelt wird.

3. System zur Dienst-Erzeugung nach Anspruch 1 oder Anspruch 2, bei dem das Management-Modul (20, 112) so ausgebildet ist, dass es nicht passende Dienst-Leistungsfähigkeiten nach Prioritätsniveaus anordnet, die den Dienst-Leistungsfähigkeiten zugeordnet sind.

4. System zur Dienst-Erzeugung nach einem der vorhergehenden Ansprüche, bei dem das Management-Modul (20, 112) so ausgebildet ist, dass es ermittelt, ob die Dienst-Leistungsfähigkeiten sequentiell, parallel oder sequentiell und parallel aufzurufen sind.

5. System zur Dienst-Erzeugung nach einem der vorhergehenden Ansprüche, bei dem das eine Aufruf-Modul (22,106) so ausgebildet ist oder die mehreren Aufruf-Module (22,106) so ausgebildet sind, dass entsprechende Aufruf-Mechanismen gemäß jeweiligen Kommunikations-Protokollen der zur Dienst-Erzeugung ermittelten Dienst-Leistungsfähigkeiten angewandt werden.

6. System zur Dienst-Erzeugung nach einem der vorhergehenden Ansprüche, das ferner eine Datenbank (16, 104) aufweist, die die so ausgebildet ist, dass sie Informationen über verfügbare Dienst-Leistungsfähigkeiten speichert.

7. System zur Dienst-Erzeugung nach Anspruch 6, bei dem das Analysemodul (18, 110) so ausgebildet ist, dass es die Dienstanforderung mit Profilen der in der Datenbank (16, 104) gespeicherten verfügbaren Dienst-Leistungsfähigkeiten vergleicht.

8. System zur Dienst-Erzeugung nach Anspruch 7, bei dem das Analysemodul (18, 110) so ausgebildet ist, dass es Kontext-Informationen in der Dienstanforderung mit den Profilen der verfügbaren Dienst-Leistungsfähigkeiten vergleicht.

9. System zur Dienst-Erzeugung nach einem der vorhergehenden Ansprüche, bei dem das Analysemodul (18, 110) so ausgebildet ist, dass es ermittelt, ob Schwellenwert-Kriterien für jeweilige Dienst-Leistungsfähigkeiten erfüllt sind.

10. System zur Dienst-Erzeugung nach einem der vorhergehenden Ansprüche, wobei das Kommunikationsnetzwerk ein Internetprotokoll-Multimedia-Subsystem (IMS)-Netzwerk ist.

11. System zur Dienst-Erzeugung nach einem der vorhergehenden Ansprüche, bei dem die Dienstanforderung von einer Serving-Call-Session-Control-Funktion (S-CSCF) (12, 192) empfangen wird.

12. Verfahren (50) zum Antworten auf eine Dienstanforderung, wobei das Verfahren umfasst:
Ermitteln einer Vielzahl von Dienst-Leistungsfähigkeiten (52) zur Dienst-Erzeugung auf der Basis der Dienstanforderung,
Bestimmen einer Aufruf-Reihenfolge (56) für die zur Dienst-Erzeugung ermittelten Dienst-Leistungsfähigkeiten,
Abgleichen der zur Dienst-Erzeugung ermittelten Dienst-Leistungsfähigkeiten hinsichtlich kompatibler und nichtkompatibler Kombinationen von Dienst-Leistungsfähigkeiten,
Aufrufen der Dienst-Leistungsfähigkeiten (58) nach dem Bestimmen der Aufruf-Reihenfolge,
Erzeugen eines Dienstes (60) mit den aufgerufenen Dienst-Leistungsfähigkeiten
und
Rücksenden des Dienstes.

13. Verfahren zum Antworten auf eine Dienstanforderung nach Anspruch 12, das ferner das Entfernen einer kollidierenden Dienst-Leistungsfähigkeit aus der Aufruf-Reihenfolge umfasst, wenn eine nichtkompatible Kombination einer Dienst-Leistungsfähigkeit ermittelt wird.

14. Verfahren zum Antworten auf eine Dienstanforderung nach Anspruch 12 oder 13, das ferner das Anordnen von nicht passenden Dienst-Leistungsfähigkeiten nach Prioritätsniveaus, die den Dienst-Leistungsfähigkeiten zugeordnet sind, umfasst.

15. Verfahren zum Antworten auf eine Dienstanforderung nach einem der Ansprüche 12 bis 14, das ferner das Ermitteln, ob die Dienst-Leistungsfähigkeiten sequentiell, parallel oder sequentiell und parallel aufzurufen sind, umfasst.

16. Verfahren zum Antworten auf eine Dienstanforderung nach einem der Ansprüche 12 bis 15, das ferner das Anwenden von entsprechenden Aufruf-Mechanismen gemäß jeweiligen Kommunikations-Protokollen der zur Dienst-Erzeugung ermittelten Dienst-Leistungsfähigkeiten umfasst.

17. Verfahren zum Antworten auf eine Dienstanforderung nach einem der Ansprüche 12 bis 16, das ferner das Vergleichen der Dienstanforderung mit Profilen von verfügbaren Dienst-Leistungsfähigkeiten umfasst.

18. Verfahren zum Antworten auf eine Dienstanforderung nach Anspruch 17, das ferner das Vergleichen von Kontext-Informationen in der Dienstanforderung mit den Profilen der verfügbaren Dienst-Leistungsfähigkeiten umfasst.

19. Verfahren zum Antworten auf eine Dienstanforderung nach einem der Ansprüche 12 bis 18, das ferner das Ermitteln, ob Schwellenwert-Kriterien für jeweilige Dienst-Leistungsfähigkeiten erfüllt sind, umfasst.

## Revendications

1. Système de génération de service dans un réseau de communication, le système comprenant :
un processeur (10, 100) configuré de manière à recevoir une demande de service, générer un service à partir d'une pluralité de capacités de service, et renvoyer le service ;
un module d'analyse (18, 110) configuré de manière à identifier les capacités de service à des fins de création de service sur la base de la demande de service ;
**caractérisé par** :
un module de gestion (20, 112) configuré de manière à déterminer une séquence d'invocation pour les capacités de service identifiées à des fins de création de service, et à mettre en correspondance les capacités de service identifiées à des fins de création de service avec des combinaisons de capacités de service compatibles et incompatibles ; et
un ou plusieurs modules d'invocation (22, 106) configurés de manière à invoquer les capacités de service après que la séquence d'invocation a été déterminée.

2. Système de génération de service selon la revendication 1, dans lequel le module de gestion (20, 112) est configuré de manière à supprimer une capacité de service conflictuelle de la séquence d'invocation si une combinaison de capacités de service incompatibles est identifiée.

3. Système de génération de service selon la revendication 1 ou 2, dans lequel le module de gestion (20, 112) est configuré de manière à agencer des capacités de service sans correspondance selon des niveaux de priorité affectés aux capacités de service.

4. Système de génération de service selon l'une quelconque des revendications précédentes, dans lequel le module de gestion (20, 112) est configuré de manière à déterminer si les capacités de service doivent être invoquées de façon séquentielle, en parallèle ou à la fois de façon séquentielle et en parallèle.

5. Système de génération de service selon l'une quelconque des revendications précédentes, dans lequel ledit un ou lesdits plusieurs modules d'invocation (22, 106) sont configurés de manière à appliquer des mécanismes d'invocation respectifs selon des protocoles de communication respectifs des capacités de service identifiées à des fins de création de service.

6. Système de génération de service selon l'une quelconque des revendications précédentes, comprenant en outre une base de données (16, 104) configurée de manière à stocker des informations concernant des capacités de service disponibles.

7. Système de génération de service selon la revendication 6, dans lequel le module d'analyse (18, 110) est configuré de manière à comparer la demande de service à des profils des capacités de service disponibles stockées dans la base de données (16, 104).

8. Système de génération de service selon la revendication 7, dans lequel le module d'analyse (18, 110) est configuré de manière à comparer des informations de contexte dans la demande de service à des profils des capacités de service disponibles.

9. Système de génération de service selon l'une quelconque des revendications précédentes, dans lequel le module d'analyse (18, 110) est configuré de manière à déterminer si des critères de seuil concernant des capacités respectives parmi les capacités de service sont satisfaits.

10. Système de génération de service selon l'une quelconque des revendications précédentes, dans lequel le réseau de communication est un réseau de sous-système multimédia de protocole Internet (IMS).

11. Système de génération de service selon l'une quelconque des revendications précédentes, dans lequel la demande de service est reçue à partir d'une fonction serveuse de commande de session d'appel (S-CSCF) (12, 102).

12. Procédé (50) de réponse à une demande de service, le procédé comprenant les étapes ci-dessous consistant à :
identifier une pluralité de capacités de service (52) à des fins de création de service, sur la base de la demande de service ;
déterminer une séquence d'invocation (56) pour les capacités de service identifiées à des fins de création de service ;
mettre en correspondance les capacités de service identifiées à des fins de création de service avec des combinaisons de capacités de service compatibles et incompatibles ;
invoquer les capacités de service (58) une fois la séquence d'invocation déterminée ;
générer un service (60) avec les capacités de service invoquées ; et renvoyer le service.

13. Procédé de réponse à une demande de service selon la revendication 12, comprenant en outre l'étape consistant à supprimer une capacité de service conflictuelle de la séquence d'invocation si une combinaison de capacités de service incompatibles est identifiée.

14. Procédé de réponse à une demande de service selon la revendication 12 ou 13, comprenant en outre l'étape consistant à agencer des capacités de service sans correspondance selon des niveaux de priorité affectés aux capacités de service.

15. Procédé de réponse à une demande de service selon l'une quelconque des revendications 12 à 14, comprenant en outre l'étape consistant à déterminer si les capacités de service doivent être invoquées de façon séquentielle, en parallèle, ou à la fois de façon séquentielle et en parallèle.

16. Procédé de réponse à une demande de service selon l'une quelconque des revendications 12 à 15, comprenant en outre l'étape consistant à appliquer des mécanismes d'invocation respectifs selon des protocoles de communication respectifs des capacités de service identifiées à des fins de création de service.

17. Procédé de réponse à une demande de service selon l'une quelconque des revendications 12 à 16, comprenant en outre l'étape consistant à comparer la demande de service à des profils de capacités de service disponibles.

18. Procédé de réponse à une demande de service selon la revendication 17, comprenant en outre l'étape consistant à comparer des informations de contexte dans la demande de service aux profils des capacités de service disponibles.

19. Procédé de réponse à une demande de service selon l'une quelconque des revendications 12 à 18, comprenant en outre l'étape consistant à déterminer si des critères de seuil concernant des capacités respectives parmi les capacités de service sont satisfaits.
